# EUROPEAN PATENT SPECIFICATION

(11) **EP 4 325 742 B1**
(45) Date of publication and mention of the grant of the patent: **08.04.2026**
(21) Application number: 23191458.1
(22) Date of filing: 15.08.2023
(51) Int. Cl.: H04B 10/112

(54) **POINTING UNITS FOR FREE SPACE OPTICAL COMMUNICATION AND METHOD OF OPERATING SAID POINTING UNITS**
AUSRICHTUNGSEINHEITEN FÜR OPTISCHE FREIRAUMKOMMUNIKATION UND VERFAHREN ZUM BETRIEB DIESER AUSRICHTUNGSEINHEITEN
UNITÉS DE POINTAGE POUR LES COMMUNICATIONS OPTIQUES EN ESPACE LIBRE ET PROCÉDÉ DE FONCTIONNEMENT DESDITES UNITÉS DE POINTAGE

(30) Priority: 18.08.2022 GB 202212057
(43) Date of publication of application: 21.02.2024
(73) Proprietor: Airbus SAS, 31700 Blagnac (FR)
(72) Inventor: QUINTANA SANCHEZ, Crisanto, Bristol, BS34 7PA (GB); ERRY, Gavin, Bristol, BS34 7PA (GB); THUEUX, Yoann, Bristol, BS34 7PA (GB)
(74) Representative: EIP

(56) References cited:
- EP-A1- 3 961 144
- KR-A- 20220 109 018
- US-A1- 2001 046 345
- US-A1- 2004 057 656
- US-A1- 2015 176 948
- US-A1- 2020 026 058
- US-A1- 2022 206 121
- US-B1- 11 002 956

## Description

### Technical Field

The present invention relates to pointing units and methods of operating pointing units, and more specifically to pointing units and methods of operating pointing units for use with free space optical communications terminal.

### Background

Free space optical (FSO) communications use light propagating in free space to transmit data. In the context of FSO communications, 'free space' refers to, for example, air, space, vacuum, or similar and is in contrast with communications via solids such as a fiber-optic cable. FSO communications can be useful for example in cases where communication via physical connections, such as fiber optic cables or other data cables, is impractical. One such case is, for example, communications between an aircraft such as a drone and a ground-based terminal.

FSO communications ordinarily rely on direct line of sight between transmitter and receiver and so rely on directing an optical beam between FSO communication nodes. This demands pointing units which can steer a beam, received from another node, into a receiver module, and steer a transmitted beam towards a target node.

FSO communications can offer higher data rates and improved security as compared to other wireless communication techniques. For example, FSO communications can achieve higher data rates, and can be less susceptible to jamming and interception compared to radio frequency (RF) communications.
US2020026058A1 relates to techniques for substantially uniform steering of multiple laser beams of a laser rangefinder having different wavelengths.
EP3961144A1 relates to a weapon aiming system including a riflescope and a laser rangefinder which includes at least one of Risley prisms operable to adjustably position a laser rangefinder aimpoint to coincide with the aimpoint of a riflescope reticle.
US2015176948A1 relates to an electro-optic system for crosswind measurement which can be mounted to a weapon to measure down range winds and range-to-target for compensating a ballistic hit point.
US2004057656A1 relates to an optical communication system including an input optical fibre, and output optical fibre, and first and second Risley prism pairs disposed in an optical path between the input optical fibre and the output optical fibre.
US2001046345A1 relates to a single channel MxN optic switch to steer light from a fiber in an input bundle into a selected fibre in an output bundle. Beam-steering optic is implemented using a Risley prism pair.
US11002956B1 relates to a co-boresight refractive beam director for a full duplex laser communication terminal which includes a chromatic beam steering element, such as a two or three prim Risley prism assembly, and a dispersion compensation mechanism inserted in either the transmit or receive path.
KR20220109018A relates to a dielectric meta-surface doublet device capable of beam manipulation.
US2022206121A1 relates to a Risley prism-based scanning mechanism for lidar.

### Summary

According to a first aspect of the present invention, there is provided a pointing unit for a free space optical communications terminal, the pointing unit being for steering an incident electromagnetic beam, the pointing unit comprising, along a principal axis thereof: a first pair of steering elements and a second pair of steering elements arranged along the principal axis such that a beam transmitted by the free space optical communications terminal is received by the first pair of steering elements and then by the second pair of steering elements, each pair comprising a first steering element and a second steering element, each steering elements of the first pair configured to steer a beam by a first steering angle and each steering element of the second pair configured to steer a beam by a second steering angle, each steering element of the first and second pairs having a substantially circular cross-section with a corresponding diameter in a plane perpendicular to the principal axis and being rotatable about the principal axis; and the pointing unit further comprising a controller configured to rotate the steering elements of the first and second pair in order to steer the incident beam towards a target according to a control scheme, wherein the control scheme comprises, for each pair of steering elements: rotation of the first steering element between respective first rotational positions and the second steering element between corresponding respective second rotational positions, each first rotational position and corresponding second rotational position being equal and opposite angular displacements from a reference rotational position of the pair, wherein the reference rotational position of the first pair is different from the reference rotational position of the second pair such that rotation of the steering elements of the first pair according to the control scheme changes a first overall steering of the incident beam in a first plane and rotation of the second pair according to the control scheme changes a second overall steering of the incident beam in a second plane different to the first plane. The pointing unit is characterised in that each steering element of the first pair has a first diameter and each steering element of the second steering pair has a second diameter, the second diameter being larger than the first diameter.

In use the control scheme permits each pair of steering elements to independently steer the incident beam through a respective plane, thereby allowing for simplified tracking in that plane.

In examples, the rotational reference position of the first pair is 90 degrees from the rotational reference position of the second pair. This means that the first plane, through which the incident beam is steered through by the first steering pair, is at 90 degrees to the second plane, through which the incident beam is steered through by the second pair. This allows the steering of the incident beam by the steering elements to be de-coupled into orthogonal planes, steering to points along orthogonal axes, which can further simplify tracking.

In examples, the control scheme comprises rotating the steering elements of a pair in opposite directions and at the same speed. This ensures that their respective rotational positions are equal and opposite from the reference position at all points during rotation. This allows the beam to be steered smoothly through a respective plane by the respective pair, which can improve tracking capabilities.

In examples, the steering elements of a pair have the same shape and mass. This can simplify the rotational control mechanisms as the steering elements have the same rotational inertia. In examples where the steering elements of a pair have the same shape and mass and the control scheme rotates the steering elements of a pair in opposite directions and at the same speed, the moment of inertia of each pair can cancel out to produce a net zero moment of inertia. This can be useful where the pointing unit is included in a spacecraft or satellite, for example, to avoid producing unwanted motion and thereby improving tracking capabilities.

In examples, the first steering angle has the same magnitude as the second steering angle. This can provide a field-of-regard which is quadrilateral. In examples where the first steering plane is orthogonal to the second steering plane, this can ensure that the field-of-regard of the pointing unit is a square. Multiple pointing units with quadrilateral fields-of-regard may be combined and tessellated to provide a larger joint field-of-regard which does not have gaps between the constituent fields-of-regard and without requiring overlap of the constituent fields-of-regard.

In examples, the magnitude of overall steering angle of each respective pair is at least 45 degrees. This allows the field-of-regard to span at least a 90-degree opening angle. In examples where the first steering plane is orthogonal to the second steering plane, the field-of-regard defines a square-based pyramid with a 90-degree opening angle. In such examples, the fields of regard of six pointing units can be combined for complete coverage, without gaps between fields of regard. In other words, the field of regard of six such pointing units can be 4π steradians. This can ensure that there are no blind spots for the free-space optical communications terminal comprised of such pointing units.

In examples, the steering elements comprise metamaterial elements. This can reduce the weight of the pointing unit compared to bulk optical elements like glass prisms. Reducing the weight of the pointing unit can improve the speed of rotation of the steering elements for faster beam steering. Additionally, using metamaterials for steering elements can reduce the thickness of each steering element required for a given steering angle, the thickness being measured in the direction of the optical axis. This can reduce the physical dimensions of the pointing unit, reducing the spatial footprint of the pointing unit. Reducing the weight and/or size of the pointing unit can be advantageous where the pointing unit is equipped to a vehicle, to improve fuel efficiency or increase available space in the vehicle, for example. Furthermore, metamaterial elements may be electronically addressable to realise additional optical control such as intensity modulation, fine-steering control, and polarisation control.

In examples, the metamaterial elements are silicon metaprisms. In other examples, the metamaterial elements are formed from silicon derivatives such as liquid crystal-on-silicon architecture or silicon-on-silica architectures, or other suitable dielectric materials for optical use such as lithium niobate.

The steering elements each have a substantially circular cross-section with a corresponding diameter in a plane perpendicular to the principal axis. This can further reduce weight by optimising the provision of surface area to the incident beam, as corners which ordinarily would not receive the incident beam are removed. This can also reduce the spatial footprint of the pointing unit, as during rotation circular steering elements trace an area equal to their area, whereas, for example, a square steering element would trace an area larger than its stationary area.

Each steering element of the first pair has a first diameter and each steering element of the second steering pair has a second diameter, the first diameter smaller than the second diameter. The steering elements of the second pair can have a larger diameter which is large enough such that it can always receive the beam from the first steering pair. Similarly, the steering elements of the first pair may be only as large as necessary to receive a beam from the second pair. This can reduce the weight of pointing unit by minimising the size of a steering pair whilst still enabling a full field-of-regard. In examples, the ratio of the second diameter to the first diameter is approximately 1.4.

In examples, the steering elements are separated by no more than 10mm. Reducing the separation between steering elements can help ensure that the beam is not clipped by the perimeters of the steering elements as it propagates through the steering elements.

In examples, the steering element is housed in a supporting element, the controller rotating the steering element by rotation of the supporting element. In examples, the supporting elements comprise integrated teeth such that the supporting element is operable as a gear. This can simplify the rotation of the support element.

In examples where the steering element is housed in a supporting element, the supporting element may comprise a magnet and the controller may comprise a Hall sensor configured to detect the magnet, and the controller is configured to establish the rotational position of the supporting element comprising a magnet by using the Hall sensor.

In examples, the steering elements of a pair of steering elements are rotated by one or more motors. The motors may be stepper motors, and the controller may count the number of steps taken by the stepper motors to keep track of the respective rotational positions of the steering elements.

According to a second aspect of the invention, there is described a free-space optical communications node comprising the pointing unit of the first aspect and a terminal comprising an optical source configured to provide the electromagnetic beam to the pointing unit.

According to a third aspect of the invention, there is described a vehicle comprising the pointing unit of the first aspect or the free-space optical communications node of the second aspect.

In examples, the vehicle is an aircraft and/or spacecraft.

According to a fourth aspect of the invention, there is described a method of operating a pointing unit, the pointing unit being according to the first aspect of the invention, the method comprising the steps of: for each steering pair, rotating the first steering element into respective first rotational positions and the second steering pair into respective second rotational positions, the corresponding first and second rotational positions being equal and opposite angular displacements from a reference rotational position of the respective steering pair, wherein the reference rotational position of the first pair is different from the reference rotational position of the second pair such that the first pair of steering elements provides a first overall steering to the incident beam in a first plane and the second pair of steering elements provides a second overall steering to the incident beam in a second plane different to the first plane.

Further features and advantages of the invention will become apparent from the following description of preferred embodiments of the invention, given by way of example only, which is made with reference to the accompanying drawings.

### Brief Description of the Drawings

Figure 1 is a schematic diagram of an exemplary free space optical communications node comprising a pointing unit and a terminal;
Figures 2a and 2b are schematic diagrams of a steering element steering a beam, the steering element orientated in different rotational positions;
Figure 3 is a schematic diagram of two steering elements, arranged in a steering pair, steering a beam;
Figures 4a and 4b are schematic diagrams of a pair of steering elements at different rotational positions;
Figures 5a and 5b are schematic diagrams of a pair of steering elements at different rotational positions;
Figure 6 is a schematic diagram of a pair of steering elements being controlled by the control scheme described herein to steer in the y-axis;
Figures 7a and 7b are schematic diagram of a pair of steering elements being controlled by the control scheme described herein to steer in the x-axis;
Figure 8a is a schematic diagram of a pointing unit controlled according to an example of the control scheme described herein;
Figure 8b is a schematic diagram of the pointing unit of Fig. 8a and its field-of-regard;
Figures 9a and 9b are schematic diagrams of two example pointing units and their respective field-of-regard;
Figure 10a is a schematic diagram of a pointing unit controlled according to an example of a control scheme described herein and arranged to steer in a non-orthogonal coordinate system;
Figure 10b is a schematic diagram of the pointing unit of 10a and its field-of-regard;
Figure 11 is a flow diagram of general steps for implementing the control scheme, according to an example;
Figure 12a is a schematic diagram of a pointing unit featuring steering pairs of different diameters, according to an example;
Figure 12b is a schematic diagram of the beam path through the pointing unit of Figure 12a, according to an example;
Figure 13 is a schematic diagram of a steering element housed in a supporting element according to an example; and
Figure 14 is a schematic diagram of an aircraft equipped with a plurality of FSO communications nodes according to examples herein.

### Detailed Description

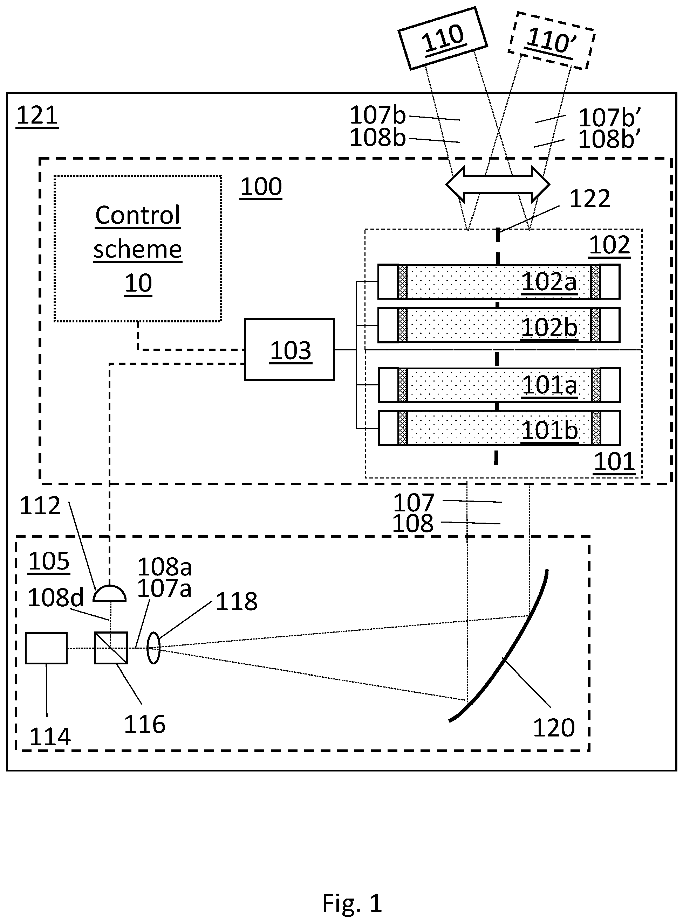

Figure 1 shows an exemplary free space optical (FSO) communications node 121 comprising: a pointing unit 100 controlled by a control scheme 10; and a terminal 105.

The terminal 105 is arranged to produce an optical output beam 107, 107a, 107b, and receive a return beam 108, 108a, 108b, for use in an optical communications scheme. The terminal 105 comprises an input/output unit 114, the output portion of the input/output unit 114 comprising a laser which emits an output beam 107a. There is a beam expanding portion, comprising a lens 118 and concave mirror 120. The output beam 107a enters the lens 118 and is expanded to become a beam 107 which has a desired diameter for transmission. The desired diameter may be a diameter which, for example, is easier to receive at another terminal in the communication network, and/or may be a diameter which reduces the intensity of light in the beam to, for example, avoid damage to obstructions to the beam. The concave mirror 120 collimates the beam 107 and directs it to the pointing unit 100.

The terminal 105 may be arranged in various other configurations. For example, variants that do not require beam diameter adjustment may dispense with the beam expanding portion. Additionally, or alternatively, the concave mirror 120 may be dispensed with and/or replaced by a transmissive collimating element, such as a lens, in variants in which the terminal 105 and the pointing unit 100 are arranged broadly in-line with one another. Whether reflective or transmissive optics are deployed in the terminal 105 depends on shape and space requirements of the overall FSO communications node 121, for example as determined by where the node is to be mounted, as will be appreciated by those skilled in the art.

The pointing unit 100 comprises a first pair of steering elements 101 comprising steering element 101a and steering element 101b and a second pair of steering elements 102 comprising steering element 102a and steering element 102b. The steering pairs 101, 102 and constituent steering elements 101a,b, 102a,b are aligned along a principal or optical axis 122 and operated by a controller 103, which controls actuators, e.g. motors (not shown) for varying rotational orientations of the steering elements 101a,b, 102a,b, according to a control scheme 10 to be described.

The beam 107 is steered by the pointing unit 100 and transmitted as a steered beam 107b towards a target 110. If the target moves to a new position 110', the controller 103 arranges the steering pairs 101, 102 to steer the beam 107 to the target at its new position as a steered beam 107b'.

When receiving the return beam, the pointing unit 100 receives a beam 108b from the target 110, whereupon the pointing unit 100 steers the beam 108b and transmits it to the terminal 105 as a steered beam 108. The beam expanding portion acts as a beam reducer when receiving the steered beam 108, reducing it to a beam 108a of suitable diameter to be received at the input portion of the input/output unit 114. A beam splitter 116 reflects a portion 108d of the beam 108a to a quadrant tracking guidance unit 112. If the target moves to a new position 110', the pointing unit receives a beam 108b' and the quadrant tracking guidance unit 112 detects a change in the position of beam 108d. As a result of this change, the quadrant tracking guidance unit 112 communicates to the controller 103 the necessary adjustments needed of the steering pairs 101, 102 such that the input portion of the input/output unit continues to receive the beam 108a.

The controller 103 in examples herein may be an embedded hardware controller operating on the basis of programmed instructions for performing guidance according to the control scheme 10 to be described. Such a controller is sufficiently responsive to changes of position of the FSO communications node 121 and/or the target 110 to actuate the optical arrangement 101, 102, and ensure efficient communications, for example, so as to limit the amount of re-transmissions that are required in the event of temporary misalignment between the FSO communications node 121 and the target 110. The controller 103 may instead deploy other arrangements of hardware and/or software (e.g. operating on a programmed processor) that can provide sufficient responsiveness to perform the required guidance and facilitate efficient communications whilst adhering to the control scheme 10.

In practice, when the FSO communications node 121 is in two-way communications with the target 110, the output beam 107 and the return beam 108 traverse substantially the same optical path, and hence the various steering and guiding arrangements in the FSO communications node 121 serve to guide both output and return beams concurrently.

When producing the output beam 107a, the output portion of the input/output unit 114 is configured to encode data onto the output beam 107a. For example, the output portion of the input/output unit 114 may be configured to modulate the output beam 107a to encode bits of data therein. The data encoded onto the output beam 107a may comprise information to be communicated to the target 110.

Each steering element 101a,b, 102a,b can steer an incident beam by an angle. That is, a beam incident on a steering element 101a,b 102a,b is deflected away from its angle of incidence. The respective steering elements 101a,b, 102a,b, of each pair 101, 102 have identical steering properties, such that a beam incident in an identical manner will be steered by an identical amount by the constituent steering elements of a pair.

The steering properties are wavelength-specific optical properties which give rise to a deflection of an incident beam, such as a refractive index or effective refractive index, or a grating period in the case of e.g. a diffraction grating. The steering properties described throughout are implicitly wavelength-dependent and are being described at a particular wavelength, as will be readily understood by the person skilled in the art. For example, the wavelength of light in the described examples is 1550 nm, but other optical wavelengths may be used in conjunction with suitably selected steering elements.

The steering elements 101a,b, 102a,b are, in this example, silicon metaprisms, which have wavelength-scale nanostructure that defines their optical properties and steering properties. The person skilled in the art will recognise that there are many potential choices in material for providing such a metasurface, for example silicon derivatives such as liquid crystal-on-silicon architecture or silicon-on-silica architectures, or other suitable dielectric materials for optical use such as lithium niobate. Additionally, the precise wavelength-scale nanostructure may be chosen to realise particular optical or steering properties. The steering elements may, in other examples, be other optical elements capable of steering a beam by a steering angle, such as bulk optic prisms or transmission gratings. The person skilled in the art will recognise that the selection of steering element can depend on the wavelength or wavelengths of light to be steered, but may also be dependent upon other optical properties of the steering element such as transmission loss or reflectivity, for example.

The optical arrangement of a pair 101, 102 of steering elements 101a-101b, 102a-102b with the optical axis 122 substantially parallel to the direction of the input beam 107, constitutes a Risley prism topology, which is an optical arrangement for beam steering. In a Risley prism topology, each steering element is independently rotated about an optical axis to rotational positions in order to steer an incident beam. The combined steering provided by the steering elements 101a, 101b produces an overall steering for the steering pair 101. A Risley prism pair of steering elements allows an incident beam to be steered to an arbitrary point within the bounds of an annulus, the size of the annulus being defined by the optical properties of the steering elements. The maximum overall steering achieved by the steering pair 101 is a function of the steering angles of the constituent steering elements 101a, 101b.

The pointing unit 100 comprises a double Risley prism topology as it comprises two pairs of steering elements 101, 102. Having two or more such pairs can eradicate the existence of the boresight blind spot, the central region of the annulus where a lone conventional Risley pair cannot steer a beam to.

The total range the pointing unit 100 can steer over is known as its field-of-regard (FoR), and will vary according to the optical properties of the steering elements 101a,b, 102a,b that are employed.

Figure 1 presents one possible FSO node 121 comprising a pointing unit 100 which is operated according to the control scheme 10. The following description and associated figures will describe the steering pairs 101, 102 and control scheme 10 in greater detail.

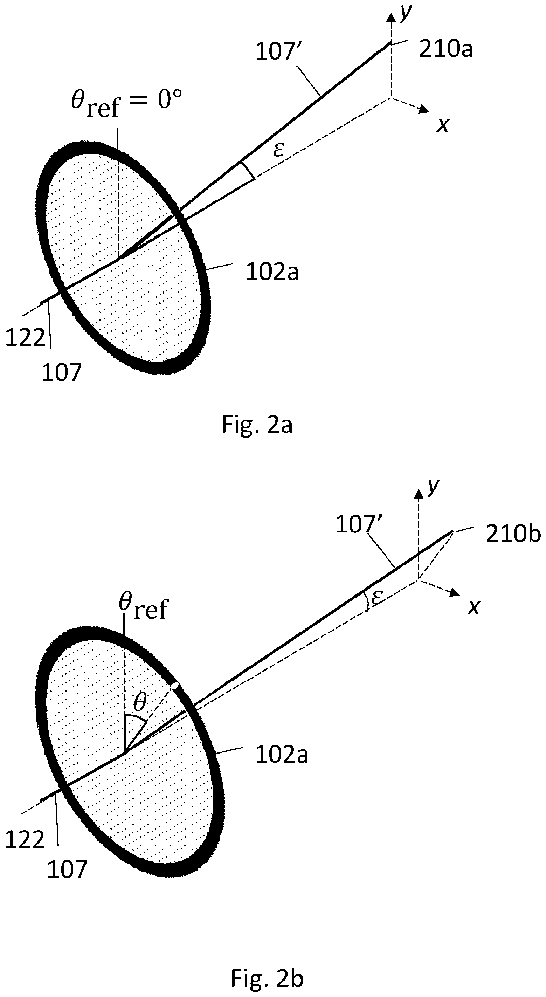

Figure 2a and 2b display, schematically, a steering element 102a of a steering pair 102 of the pointing unit 100. The behaviour of steering element 102a is here described without considering the presence of the other steering elements 101a,b, 102b in the pointing unit 100. The description of the configuration of 102a should be understood to be generally illustrative of the individual behaviours of all steering elements 102a,b 101a,b of the pointing unit 100.

The steering element 102a has a steering angle *ε*, by which an incident beam 107 is steered. In this example, the beam 107 is co-linear with the optical axis 122 of the steering element 102a and so is incident normally to the steering element 102a. The beam 107 leaves the steering element 102a as a steered beam 107' which has deviated by an angle *ε*. The orientation of the steering angle *ε* depends on the physical orientation of the steering element 102a. In this case, the steering element 102a is a silicon metaprism which has wavelength-scale structure, the orientation of which, relative to the beam, determines the orientation of the steering. In the case of a wedge prism, the orientation of the angled face of the wedged prism will determine the steering angle *ε*.

The steering element 102a has a reference rotational position indicated by *θ*_{ref}. The reference rotational position *θ*_{ref} is taken to be the rotational position, or rotational alignment, of the steering element 102a in a plane perpendicular to the optical axis 122 which produces a steering of the incident beam 107 to the steered beam 107' by the steering angle *ε* along the y-axis of a coordinate system defined by orthogonal axes x, y and z, such that the steered beam 107' can be found at a target location 210a which lies on the y-axis. In this case, the coordinate system uses the optical axis 122 as a *z-*axis, the *y*-axis is a vertical direction (e.g. perpendicular relative to the earth's horizon) and the x-axis a horizontal direction (e.g. parallel to the earth's horizon). However, those skilled in the art will appreciate that the choice of orthogonal coordinate system, and specifically what real-world features the x-axis and y-axis relate to, if any, can be arbitrary and can be chosen based on the most appropriate system for the application of the pointing unit 100.

Rotation of the steering element 102a from the reference rotational position *θ*_{ref} by a rotation *θ* puts the steering element 102a in a rotational position which steers the beam 107, 107' such that it falls to a target location 210b defined by a steering in both the x and y axes, as seen in Figure 2b. The beam is still steered by an angle *ε* but in a different plane to the steering illustrated by Figure 2a.

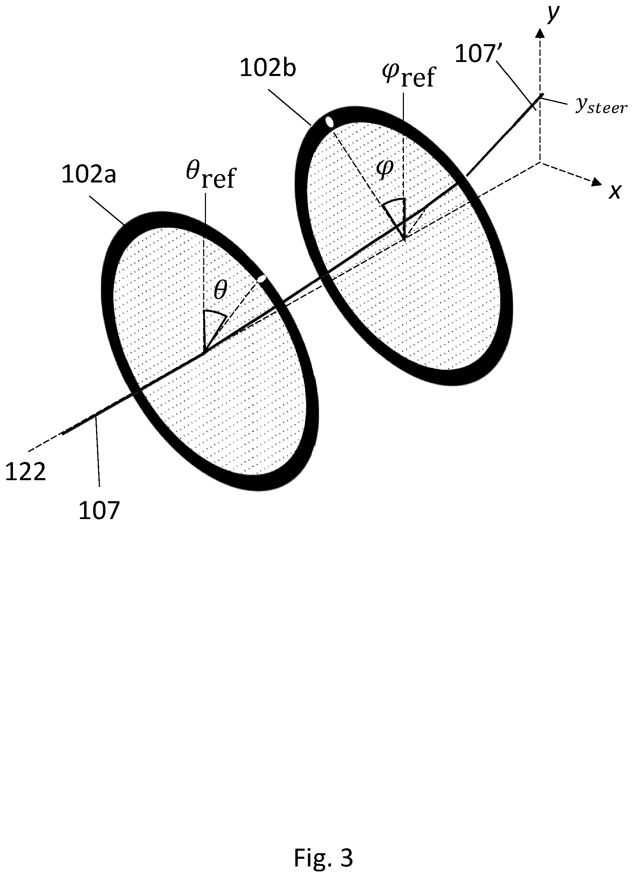

Figure 3 schematically illustrates steering elements 102a and 102b arranged sequentially along the optical path 122. For visual clarity, the steering elements 102a,b are shown in exploded view such that they are spatially separated, but in practice they may be close to one another, for example separated by less than 10 mm. Steering element 102b produces, in isolation, the same steering angle *ε* to an incident beam as steering element 102a. In this example, steering elements 102a and 102b are structurally identical silicon metaprisms, but in other examples they may just have identical optical steering properties in that they both steer an incident beam by an angle *ε* but are otherwise structurally different. For example, steering element 102a might be a bulk optic prism whilst steering element 102b is a metamaterial-based planar element such as a metaprism, both arranged to steer an incident beam by the same steering angle.

Steering element 102a has a rotational position defined by a rotation *θ* from the reference rotational position *θ*_{ref}. Steering element 102b has a reference rotational position *φ*_{ref} which is defined in the same way as *θ*_{ref}, in that it defines the rotational position necessary to steer a beam along the *y*-axis of the coordinate system. Steering element 102b is in a rotational position defined by a rotation *φ* from the reference rotational position *φ*_{ref}. The steering elements 102a, 102b of the Risley pair 102 share the same rotational coordinate system. That is, the reference rotational positions are taken to be *θ*_{ref} = *φ*_{ref} = 0°.

Steering element 102a has been rotated by *θ* = 30° and steering element 102b has been rotated by *φ* = - 30°. That is, they have been rotated to equal and opposite angular displacements from the reference rotational position *θ*_{ref}, *φ*_{ref}. Those skilled in the art will appreciate that, in other examples, the rotational coordinate systems of each steering element 102a, 102b could be defined differently to one another, providing it was known how to transform from one coordinate system to another.

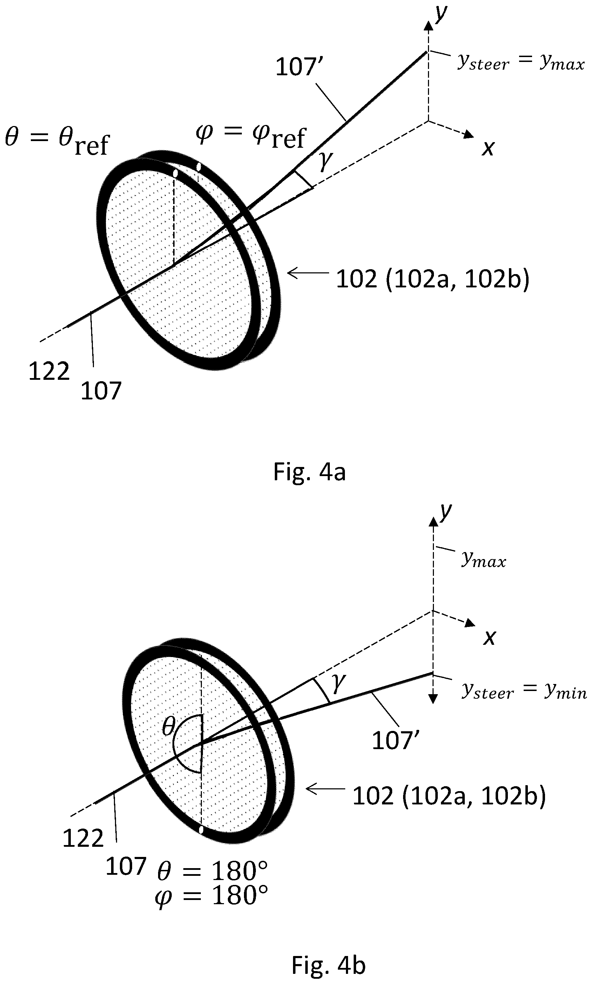

The arrangement of steering elements 102a and 102b in their respective rotational positions, defined by *θ* and *φ*, result in the incident beam 107 being steered and emitted as a steered beam 107' to a location *yₛₜₑₑᵣ* located on the *y*-axis. This occurs because the steering of each steering element along the *y*-axis is combined constructively to produce a larger overall steering in the *y*-axis, whereas the steering along the *x*-axis achieved by the first steering element 102a is corrected by the opposite steering in the *x*-axis achieved by the second steering element 102b. This produces a steered beam 107' which has a fixed *x*-position (*x* ≈ 0). The resulting steered beam 107' can be considered to have undergone an overall steering (*γ*, not labelled here but see e.g. Fig. 4a) without considering the specific intermediate steering achieved by each interface of the steering elements 102a, 102b. Importantly, the overall steering *y* is a function of the individual steering angles *ε*. At maximum (depicted in Fig. 4a and discussed shortly) the overall steering angle *γ* can be 2*ε* and at minimum can be zero.

Figures 4a and 4b schematically illustrate the steering pair 102 in the rotational positions which steer a beam by a maximal amount along the *y*-axis.

In Fig. 4a, both steering elements 102a, 102b are co-aligned at the reference rotational positions *θ*_{ref}, *φ*_{ref} such that *θ = φ =* 0°. This produces a maximal steering *yₛₜₑₑᵣ* in the *y*-axis such that beam 107 is steered by an overall angle γ to produce a steered beam 107' which goes to a target point *yₘₐₓ*. The maximal steering angle *γ* is twice the steering angle *ε* of each individual element 102a, 102b.

In Fig. 4b, both steering elements 102a, 102b are co-aligned at 180-degrees from the reference rotational positions *θ*_{ref}, *φ*_{ref} such that *θ = φ* = 180°. This produces a maximal steering *yₛₜₑₑᵣ* in the negative direction of the *y*-axis such that the steered beam 107' goes to a target point *yₘᵢₙ*, where *yₘᵢₙ* = *-yₘₐₓ.* The magnitude of the maximal steering angle *γ* to *yₘᵢₙ* is twice the steering angle *ε* of each individual element 102a, 102b.

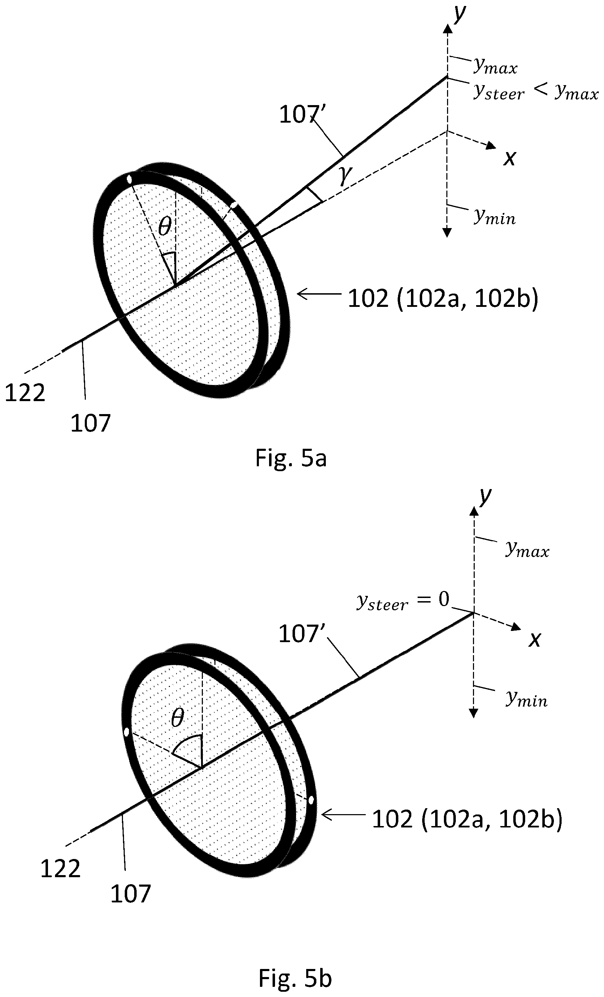

The rotational positions illustrated in Figures 4a and 4b represent the bounds of the steering in the y-axis. Figures 5a and 5b illustrate schematically rotational positions of the steering elements 102a, 102b of the steering pair 102 which access points along the *y*-axis within these bounds.

In Fig. 5a, the steering elements 102a, 102b are rotated to a position defined by *θ = -φ*, where both |*φ*| and |*θ*| are less than 90-degrees. This reflects the arrangement depicted by Fig. 3. In such a case, the beam 107, 107' is steered by an angle y to a point *yₛₜₑₑᵣ* on the *y*-axis which is more than zero, but less than the point associated with maximum steering *yₘₐₓ*. If the steering elements are similarly rotated to positions defined by *θ = -φ*, where both |*φ*| and |*θ*| are more than 90-degrees, the beam 107, 107' is steered by an angle y to a point on the y-axis which is less than zero, but more than the point associated with maximum steering *yₘᵢₙ*.

In Fig. 5b, the steering elements are rotated to a position defined by *θ* = *-φ*, where both |*φ*| and |*θ*| are 90-degrees. In this arrangement, the beam 107 essentially undergoes no overall steering, and remains co-linear with the optical axis 122 to access the origin of the co-ordinate system. In practice, there may be a boresight blind-spot in a pair of Risley prisms so *yₛₜₑₑᵣ* will not be exactly located at the origin, but may be considered close enough to the origin for the required accuracy and precision of the pointing unit 100.

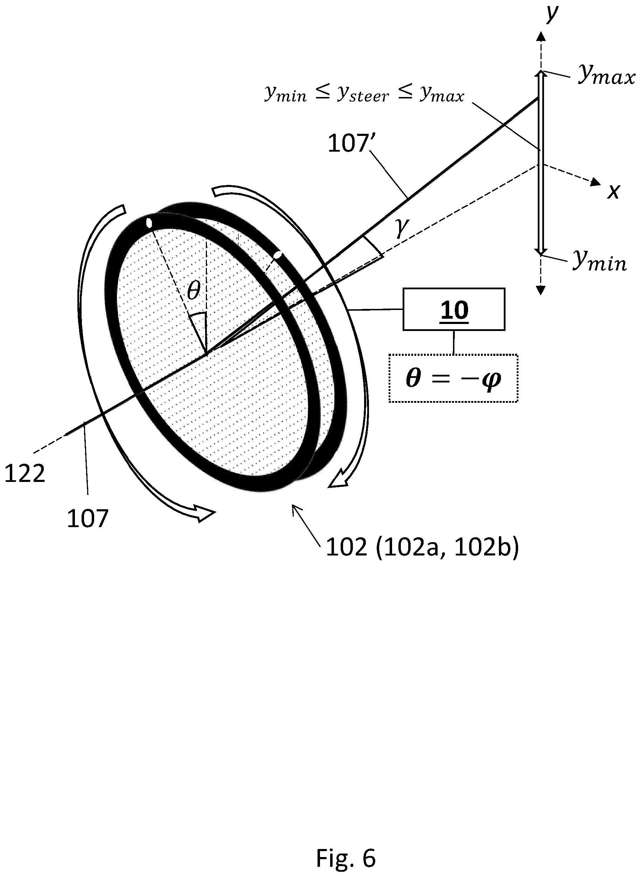

Having described the behaviour of two steering elements 102a,b which have identical optical steering properties and are co-aligned with respect to a reference position which produces a steering in an axis of a coordinate system of the free-space optical communications scheme, the control scheme 10 is now introduced. Figure 6 illustrates the pair of steering elements 102 being controlled according to the control scheme 10. The rotational positions of the steering elements 102a, 102b of the pair are linked by the condition that *θ = -φ*, such that the steering elements are always located at opposite and equal angular displacements away from the rotational reference position *θ*_{ref}, *φ*_{ref}. When the steering elements 102a,b of the steering pair 102 are rotated the overall steering angle *γ* is changed to sweep a steered beam 107' through a plane to positions *yₛₜₑₑᵣ* which lie on the *y*-axis between *yₘₐₓ* and *yₘᵢₙ*, the plane parallel to the *y*-axis and the optical axis 122. In examples, the controller 103 ensures that the steering elements 102a, 102b are rotated at equal speeds and in opposite directions in order to enforce the condition *θ = -φ* through contra-rotation. This smoothly tracks the beam between respective positions on the *y*-axis.

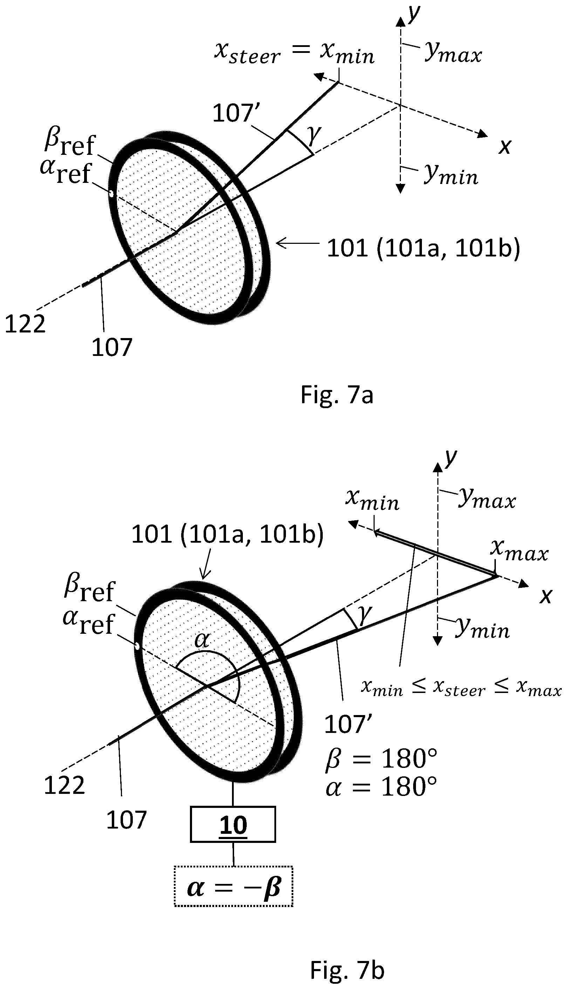

So far, only steering control confined to the *y*-axis has been discussed. Figures 7a and 7b schematically illustrate the steering pair 101, which is configured to steer in the x-axis.

The steering elements 101a, 101b have the same optical steering properties as each other, in that they both individually steer a beam by a same steering angle *ε*. However, if steering elements 102a,b of the steering pair 102 each steer by an angle *ε*₁ and steering elements 101a,b of the steering pair 101 each steer by an angle *ε*₂, it is not necessary that *ε*₁ = *ε*₂*.* If the individual steering angles of the pairs are not equal, that is *ε*₁ ≠ *ε*₂, then this will impact the field-of-regard of the pointing unit 100, as discussed later.

The steering elements 101a, 101b have rotational positions α, *β* with respect to reference positions *α*_{ref}, *β*_{ref}. The reference positions *α*_{ref}, *β*_{ref} are co-aligned with each other, similar to the reference positions *θ*_{ref}, *φ*_{ref} of steering elements 102a, 102b so that *α*_{ref} = *β*_{ref}, but reference positions *α*_{ref}, *β*_{ref} are displaced (in the angular coordinate system) by 90-degrees relative to the reference positions *θ*_{ref}, *φ*_{ref}. In the same manner explained for the arrangements illustrated by Figures 2-6, this allows steering elements 101a, 101b to steer the beam 107, 107' to positions along the x-axis, rather than the *y-*axis as per steering elements 102a, 102b. In Fig. 7a, the steering elements 101a, 101b are in their respective rotational reference positions *α*_{ref}, *β*_{ref} such at *α* = 0°, *β* = 0° and thereby steer the beam 107, 107' to a point *xₘᵢₙ* which lies on the x-axis. The point *xₘᵢₙ* is reached by the largest overall steering y in the negative x-direction, the overall steering angle y being determined by the steering angles *ε* of the steering elements 101a, 101b. In Fig. 7b, the steering elements 101a, 101b are arranged at rotational positions *α* = 180°, *β* = 180° from their respective rotational reference positions *α*_{ref}, *β*_{ref} and thereby steer the beam 107, 107' to a point *xₘₐₓ* which lies on the x-axis. The controller 103 implementing the control scheme 10 can thereby steer the beam 107 through a plane parallel to the x-axis and the optical axis 122 to points *xₛₜₑₑᵣ* along the x-axis, bounded by points *xₘₐₓ* and *xₘᵢₙ*, by ensuring that the condition *α* = - *β* is adhered to throughout the steering process.

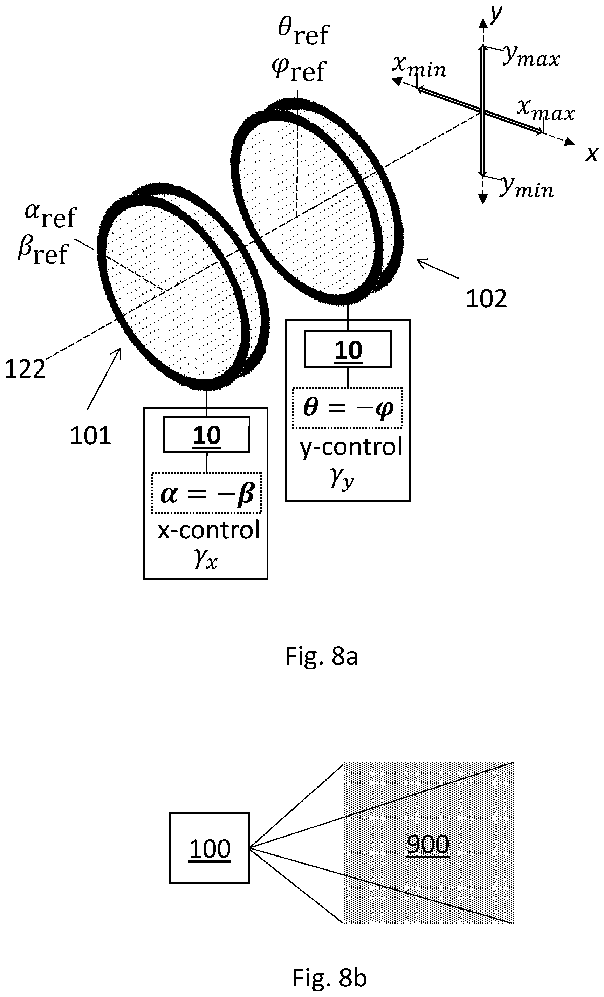

Figure 8a schematically illustrates the optical arrangement of steering pairs 101, 102 which can be used in the pointing unit 100 and controlled according to the control scheme 10. For visual clarity, the pairs 101, 102 are shown in exploded view such that they are spatially separated, but in practice they may be close to one another, for example the steering elements may be equally spaced by 6mm. The control scheme 10 comprises, for each pair 101, 102, rotation of the first steering element 101a, 102a, of the pair 101, 102 between respective first rotational positions *α*, *θ* and rotation of the second steering element 101b, 102b of the pair 101, 102 between corresponding respective second rotational positions *β, φ*, each first rotational position *α*, *θ* and corresponding second rotational position *β, φ* being equal and opposite angular displacements from a reference rotational position of the pair *α*_{ref} = *β*_{ref}, *θ*_{ref} = *φ*_{ref}. For example, the control scheme may 10 comprise, for the first pair 101 (e.g. the x-control pair), rotation of the first steering element 101a of the pair 101 between first rotational positions *α*, (e.g. from *α =* 10° to *α* = 30°) and rotation of the second steering element 101b of the pair 101 between corresponding respective second rotational positions *β* (e.g. from *β* = -10° to *β* = -30°), each first rotational position *α* and corresponding second rotational position *β* being equal and opposite angular displacements from a reference rotational position of the first pair (e.g. *α*_{ref} = *β*_{ref} = 0). The rotation of the steering elements 101a, 101b of the first pair 101 according to the control scheme changes a first overall steering *γₓ* of the incident beam in a first plane (in this example, the x axis). Similarly, the control scheme may 10 comprise, for the second pair 102 (e.g. the y-control pair), rotation of the first steering element 102a of the pair 102 between first rotational positions *θ*, (e.g. from *θ* = 20° to *θ* = 40°) and rotation of the second steering element 102b of the pair 102 between corresponding respective second rotational positions *φ* (e.g. from *φ =* -20° to *β* = -40°), each first rotational position *θ* and corresponding second rotational position *φ* being equal and opposite angular displacements from a reference rotational position of the second pair (e.g. *θ*_{ref} = *φ*_{ref} = 0°). Rotation of the steering elements 102a, 102b of the second pair 102 according to the control scheme changes a second overall steering *γ_{y}* of the incident beam in a second plane (in this example the y axis) different to the first plane. Accordingly, the steering pair 101 (the x-control pair) is controlled by the controller 103 according to the control scheme 10 to implement steering *γₓ* in the x-direction and the steering pair 102 (the *y*-control pair) is controlled by the controller 103 according to the control scheme 10 to implement steering *γ_{y}* in the *y*-direction. . Whilst each pair 101, 102, when considered individually, steers only to points along the *x* or *y* axis respectively, when combined sequentially in this manner, the x-control pair determines the x-coordinate of the steered beam and the *y*-control pair determines the *y*-coordinate of the steered beam. The resulting optical arrangement of steering pairs 101, 102 being controlled according to the control scheme 10 can thereby reach any point within the *(x, y)* coordinate system and can independently track in a direction parallel to the *x*-axis or *y*-axis through the rotation of just one respective steering pair 101, 102.

As a result, when a target is moving with respect to just the x-axis, for example, it is only necessary to rotate steering pair 101 in order to smoothly track the target. Likewise, when a target is moving with respect to just the *y*-axis, it is only necessary to rotate steering pair 102 in order to smoothly track the target. De-coupling x and y steering in this way may provide for improved tracking performance.

For example, de-coupling *x* and *y* steering in this way may simplify the tracking scheme by allowing for a straightforward mapping of *(x, y)* coordinates to respective rotational positions of the first and second pair. The simplified mapping may, for example, reduce the processing power required by the controller 103 to perform tracking. For example, height of a target may be obtained from an altimeter on the target, or identified from an image of the target taken at the pointing unit, which can then be translated to ay-coordinate and associated rotational position required by the*y-*control steering pair. An analogous process would apply to the *x*-coordinate and *x-*control steering pair. Reducing processing required by the controller 103 may ensure faster response times of the pointing unit and hence improved tracking performance. Alternatively or additionally, as mentioned, when a target is moving with respect to only one of the axes, it is only necessary to rotate the corresponding steering pair.

Further, using two pairs of steering elements with de-coupled steering control as described herein can provide improved control around the centre point (i.e. near the optical axis 122), for example as compared to a single pair of steering elements. In a single-pair system, at or near the centre point (where x and y are zero), i.e. at or near the optical axis 122, the relationship between overall steering and the rotations of the steering elements needed to achieve the overall steering becomes highly non-linear. Specifically, small adjustments around the centre point (near the optical axis) can require large rotations of the steering elements. For example, in a single-pair system, steering a beam from a point on the x-axis which is close to the centre point (e.g. x = 0.001, y = 0) to a point on the *y*-axis which is close to the centre point (e.g. x = 0, y = 0.001) can involve rotating both prisms by 90 degrees, despite the two points being geometrically close together. However, in the present two-pair system with de-coupled control, achieving the equivalent steering adjustment involves only small rotations due to the independent *x, y* control. Specifically, this would require rotation of the steering elements to go from 0.001 to 0 in x, and from 0 to 0.001 in y, which in the present two-pair system with de-coupled control would involve much smaller rotation of the steering elements. Reducing the rotation required in this manner can improve the speed and stability of tracking performance.

Figure 8b schematically illustrates the resulting field-of-regard 900 achieved by the pointing unit 100. The field of regard 900 is pyramidal and spans a quadrilateral area due to the independent steering access to orthogonal axes.

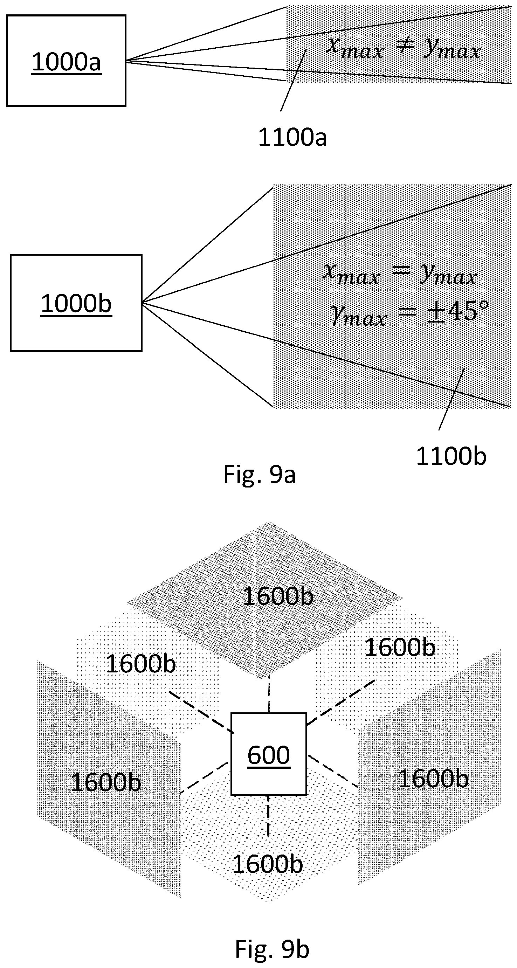

Figures 9a and 9b schematically illustrate exemplary fields-of-regard achieved by pointing units according to the present invention. In Fig. 9a, a pointing unit 1000a achieves a rectangular field-of-regard. The field-of-regard 1000a is rectangular because pointing unit 1000a spans a larger range in the x-direction (defined by bounds *xₘₐₓ, xₘᵢₙ*) than in the y-direction (defined by bounds *yₘₐₓ, yₘᵢₙ*)*.* This corresponds to the maximum overall steering angle in the x-axis *γₓ* being larger than the maximum overall steering angle in the *y*-axis *γ_{y}*. This can be achieved by the steering angles *εₓ* of the elements comprising the x-control steering pair being larger than the steering angles *ε_{y}* of the *y*-control steering pair. This could be advantageous when the pointing unit is not required to access a large steering range in the *y*-axis due to the geometry of the free-space optical communications scheme, for example, and so could improve the tracking performance by reducing the steering angle achieved per degree of rotation of the respective steering element, making the *y*-control more accurate.

In Figure 9a, a pointing unit 1000b achieves a square field-of-regard 1100b. This is achieved when the maximum overall steering in the *y*-axis *γ_{y}* is equivalent to the maximum overall steering in the x-axis *γₓ*. In pointing unit 1100b, the maximum overall steering y achievable in either direction is ±45° due to the choice of individual steering elements. This produces an opening angle for the field of regard of 90°.

Figure 9b schematically illustrates a terminal 600 comprising six of the pointing units 1000b, arranged to face along different axes of a three-dimensional coordinate system. The combined field-of-regard 1600b, shown here in exploded-view, covers the entirety of the space surrounding the pointing terminal 600, due to the opening angle of the square pyramid field-of-regard of an individual pointing unit 1000b. In other words, the field of regard 1600b covers a solid angle of 4π steradians. This can be advantageous in ensuring that the terminal can be accessible as part of the free-space optical communications scheme from any angle and therefore without any blind-spots. A pointing unit based on a single Risley prism pair will, in general, have a conical field-of-regard, and so constructing a combined field-of-regard without blind spots in the same manner as 1600b may not be possible.

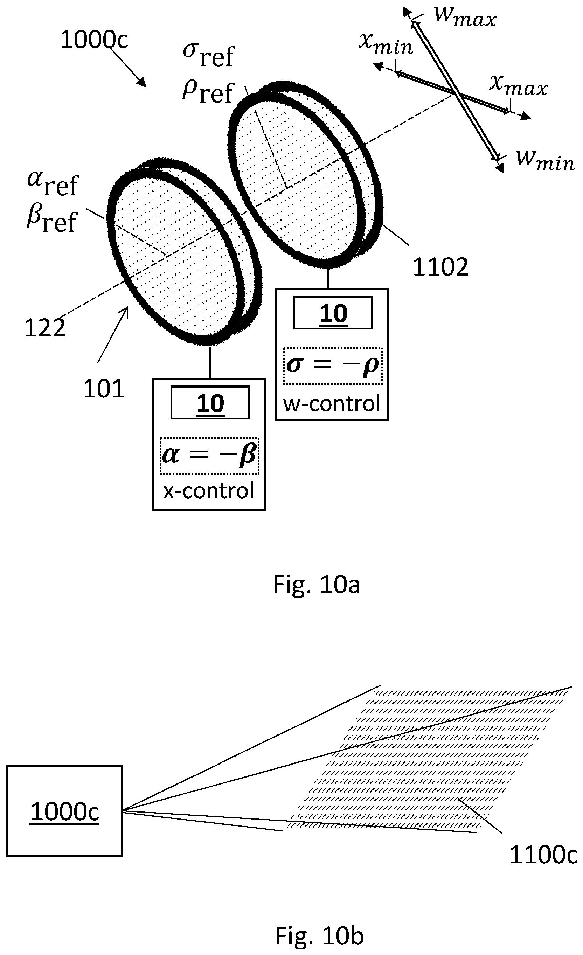

In the examples described so far, the steering has been split into *x* and *y* control by configuring the steering pairs to be rotated 90-degrees relative to one another. However, more generally the steering control can be decoupled into any two basis vectors which are not necessarily orthogonal. Figures 10a and 10b schematically illustrate a pointing unit 1000c comprising steering pair 101 and a steering pair 1102. Steering pair 1102 comprises steering elements in rotational positions *σ, ρ* relative to a reference position *σ*_{ref}, *ρ*_{ref}. Reference positions *σ*_{ref}, *ρ*_{ref} are located at an angular displacement from *α*_{ref}, *β*_{ref} which is not equal to 90, 180 or 270 degrees, and the steering pair 1102 is subject to the control scheme 10 which constrains *σ* = -*ρ* such that the steering pair 1102 steers between points *wₘₐₓ* and *wₘᵢₙ* along an axis w. The steering plane formed by axis w and the optical axis 122 is non-orthogonal to the plane formed by axis *x* and the optical axis 122. Choosing non-orthogonal axes *x, w* in this manner may be advantageous when the target moves predominantly parallel to either of these axes *x, w,* rather than in a predominantly *x-y* fashion. Figure 10b schematically illustrates the field-of-regard 1100c achieved by the pointing unit 1000c, which is quadrilateral, spanning a parallelogram due to the non-orthogonal axes *x, w*. In the case where the steering pairs can access the same maximum overall steering angles *γₓ*, *γ_{w}*, the field-of-regard will form a rhombus due to the same range of accessible points along axes *x, w*.

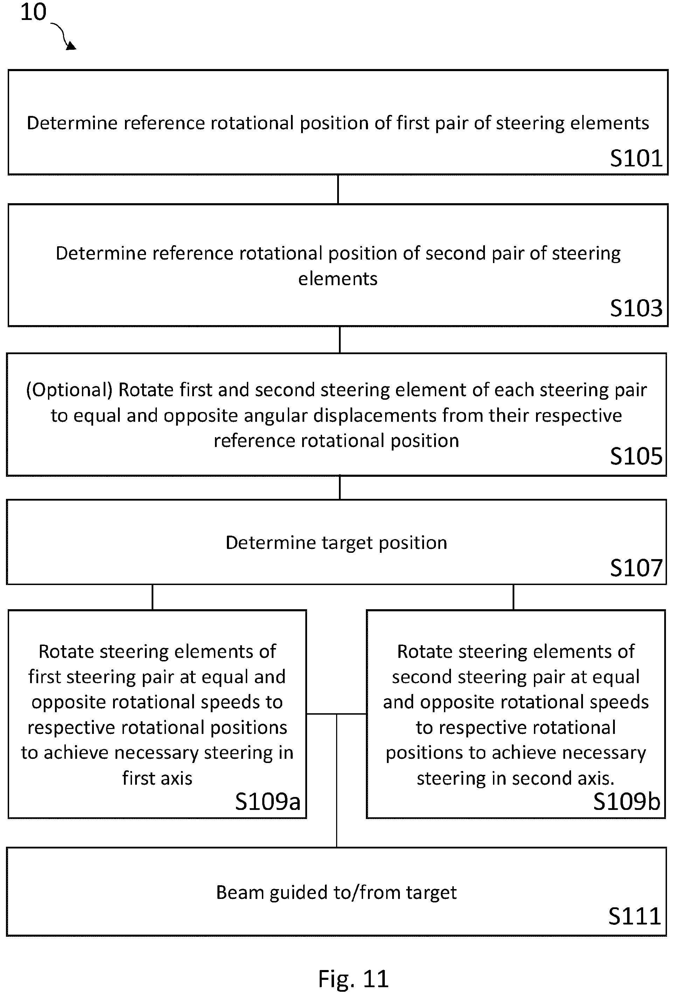

Figure 11 is a flow diagram which illustrates general steps that may be used to implement control scheme 10, according to an example.

In step S101, the reference rotational position for the first pair of steering elements is determined. This defines a first steering axis to points along which a beam can be steered, and thereby defines a first steering plane through which the beam can be steered. Step S101 (and S103) may involve determining the reference rotational position by pre-programming the control scheme 10 with a fixed reference rotational position, or a plurality of fixed reference rotational positions and selecting one of the plurality. In some examples, determining the reference rotational position may comprise reading a pre-programmed reference rotational position from memory (not shown). In other examples, step S101 (and S103) may involve obtaining an orientation of the pointing unit or FSO node, or using an image capturing the same area as the field-of-regard of the pointing unit, in order to determine a suitable reference rotational position based on the orientation or captured image.

In step S103, the reference rotational position for the second pair of steering elements is determined. The reference rotational position for the second pair of steering elements is different to the reference rotational position of the first pair of steering elements. This defines a second steering axis to points along which a beam can be steered, and thereby defines a second plane through which the beam can be steered, the first steering plane different to the second steering plane. If the reference rotational position of the first pair of steering elements is rotated ninety degrees relative to the reference rotational position of the second pair of steering elements, then the first steering axis is perpendicular to the second steering axis and the first steering plane perpendicular to the second steering plane.

In step S105, the first and second steering elements of each steering pair are rotated to equal and opposite angular displacements for their respective reference rotational positions. This step may be performed, for example, as an initialisation step in cases where the steering elements are located at arbitrary rotational positions which are not in adherence with the control scheme 10. For example, if the pointing unit is powered down then the steering elements may be in random rotational states until the pointing unit is powered up. However, in other examples the steering elements of the steering pairs may remain in rotational positions which adhere to the control scheme 10 at all times, for example by being mechanically fixed to remain in position.

In step S107, the position of a target is determined. This may be the position of a target which is to receive a beam from the pointing unit 100, or may be the position of a target which is transmitting a beam to the pointing unit 100. Determination of the target position may be based on *a-priori* knowledge of where the target will be at a certain time, for example a satellite on a predictable orbit path or aircraft on a predictable flight path, which allows the target location to be known without making optical contact. In other examples, determination of the target position may be through provision of *x, y* coordinates in the coordinate system of the pointing unit, for example if an aircraft communicates elevation and GPS coordinates to the FSO node 121. The person skilled in the art will understand that other methods of determining the target position may be used.

Steps S109a and S109b may occur simultaneously or sequentially, and only one of S109a or S109b may be required to take place. In steps S109a and 109b, the steering elements of each steering pair are rotated in opposite directions and at equal speeds to respective rotational positions necessary to achieve steering in the respective steering axis accessed by the respective steering pair. That is, the steering elements of the first steering pair are rotated to steer the beam at the required angle in the first steering plane, to a coordinate of the first steering axis, and the steering elements of the second steering pair are rotated to steer the beam at the required angle in the second steering plane, to a coordinate of the second steering axis. By rotation in opposite directions and at equal speeds each steering element of the steering pair remains an equal and opposite angular displacement from the respective reference rotational position, which ensures smooth beam tracking through the respective steering plane.

The combined effect of steps S109a,b result in step S111, in which the beam is guided to/from the target. That is, if the beam is being received from the target, then at step S111 the beam is guided into the input module 114 of the FSO node 121. If the beam is being transmitted to the target, then at step S111 the beam is successfully steered to and received at the target. Such communication may of course be bidirectional and in which case at step S111 a first beam is steered from the node 121 to the target and a second beam is steered from the target to the node 121.

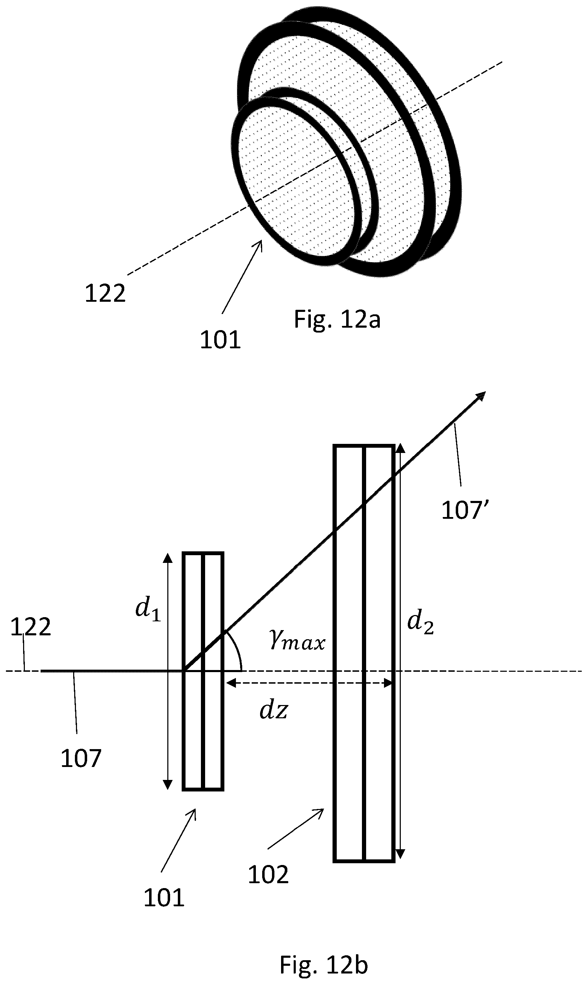

The following figures 12a-14 describe additional implementational details which may supplement the pointing unit 100 implementing described control scheme 10.

Figures 12a and 12b schematically illustrate the relative sizes of the steering pairs 101, 102 according to one example of the pointing unit 100. The steering elements of steering pair 101 have a diameter of *d*₁ and steer an incident beam 107 by a maximum overall steering of *γₘₐₓ* to produce a steered beam 107'. The second steering pair 102 has a diameter *d*₂ and is located a distance *dz* from the steering pair 101.

The diameter *d*₂ of the steering pair 102 is sufficiently large that even at maximum steering *γₘₐₓ* the steered beam 107' passes through the steering pair 102 without being clipped by the edge of the steering pair 102. Whilst the beam 107' is here depicted as a beam width which is very small relative to the size of the steering elements, in practice it may be expanded and so the steering elements will need to be sufficiently large to ensure that none of the beam width is clipped by the edge of the steering elements. In the example depicted in Figure 12a,b, the diameter *d*₁ of the steering pair 101 is 70mm and the diameter *d*₂ of the steering pair 102 is 100mm, the steering elements being separated by 6mm, the arrangement of steering pairs being able to steer a beam diameter of 60mm without clipping. Preventing clipping ensures that the field-of-regard of the pointing unit 100 is not reduced by blocking or otherwise disrupting the beam.

It is not, therefore, necessary that both steering pairs comprise steering elements with a diameter *d*₂. Reduction of one pair of steering elements 101 to a smaller diameter *d*₁ can thereby reduce the weight of the pointing unit 101 without sacrificing optical performance by e.g. introducing beam clipping. Additionally, this can permit the smaller pair 101 to rotate more quickly, which may be useful where fast tracking is required along one steering axis compared with another, for example if the target is likely to have fast horizontal motion but slow vertical motion.

In this example, the ratio between the larger diameter *d*₁ and second diameter *d*₂ is approximately 1.4 but in general this ratio will depend on the steering angles achieved by the steering elements and the separation between the steering elements.

Whilst in this example the beam diameter is 60mm and the steering elements are sized appropriately to ensure no beam clipping, the system can be scaled to be larger or smaller depending on, for example, the intended use of the pointing unit. In this example, the intended range of the FSO node is up to 100km but in other examples the intended range may be up to 100m. In such an example, expanding the beam to 60mm may not be required, which in turn permits the steering elements to have smaller diameters whilst being sized appropriately to ensure no beam clipping.

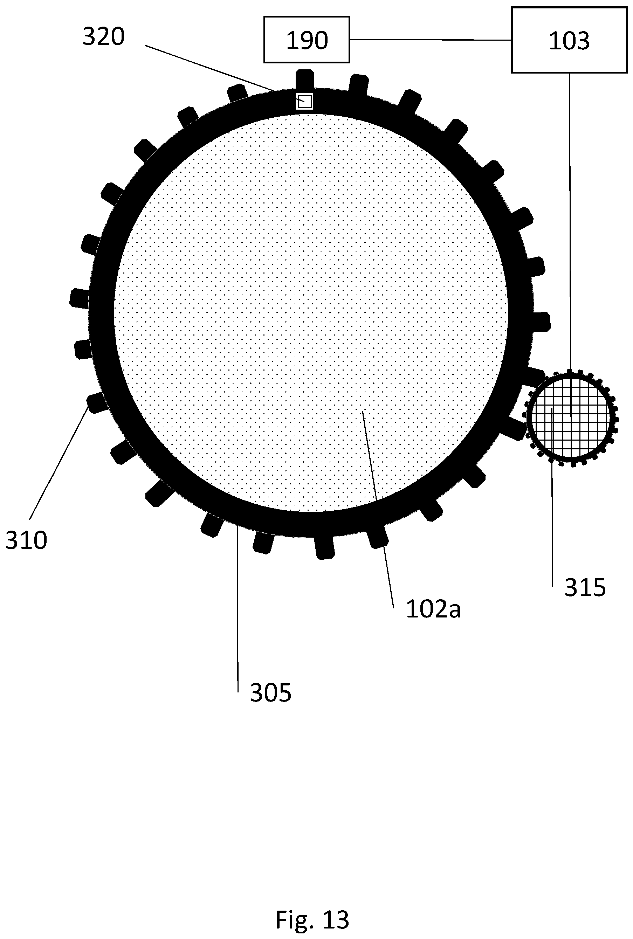

Figure 13 schematically illustrates an arrangement of a controller 103, a Hall sensor 190 and a steering element 102a housed in a supporting element 305. The supporting element 305 comprises integrated gear teeth 310 on the outer perimeter which allow for its rotation by a motor (not pictured) driving a gear 315. The motor in this example is a stepper motor, and the controller 103 configured to count the steps taken by the stepper motor in order to track the rotational position of the respective steering element. In this example, each steering element 101a,b, 102a,b is independently driven by a respective motor-driven gear 315, but in other examples one motor-driven gear may concurrently drive two such geared-supporting elements 305 of a pair to rotate them in opposite directions. This can provide a straightforward means of enforcing the contrarotation required by the control scheme 10.

The supporting element 305 comprises a magnet 320 located on its perimeter at the reference rotational position. The Hall sensor 190 is provided to measure the magnetic field produced by the magnet 320. In this way, the Hall sensor 190 can be used to determine when the steering element 102a is at its reference rotational position, for example for the purposes of calibration. For example, the controller 103 may initially cause stepper motor (not shown) to rotate the steering element 102a until the Hall effect sensor 190 detects the magnet 320. At this point the controller 103 may determine that the steering element 102a is in its reference rotational position. The controller may then count or otherwise keep track of the number of steps (and the direction of those steps) subsequently taken by the motor, in order to determine (e.g. keep track of) the current rotational position of the steering element. By using a stepper motor and a Hall sensor in combination it may be possible to measure the rotational orientation of the steering element more accurately and/or reliably. The arrangement illustrated in Figure 13 can be implemented for all steering elements of the pointing unit to provide for their respective rotational positioning control.

In other examples the supporting element 305 may comprise a plurality of magnets of different strengths and the Hall sensor 190 calibrated to recognise from the measured field strength which of the magnets is nearest the Hall sensor 190 and thereby determine the rotational position of steering element 102a. In other examples, the rotational orientation of each steering element may be determined optically, for example by the presence of fiducial markers disposed on the surface of the supporting element 305 and means to identify them.

An additional consideration is the physical properties of the steering elements comprising a pair. In cases where the steering elements of a pair have identical size and mass, then during contra-rotation by the controller 103 the steering elements have opposite angular momentums and so the steering pair has zero overall angular momentum. This can remove the presence of precession or nutation effects, which may be useful if the FSO node 121 is housed in a satellite, for example, where nutation and precession could act to reorientate the satellite.

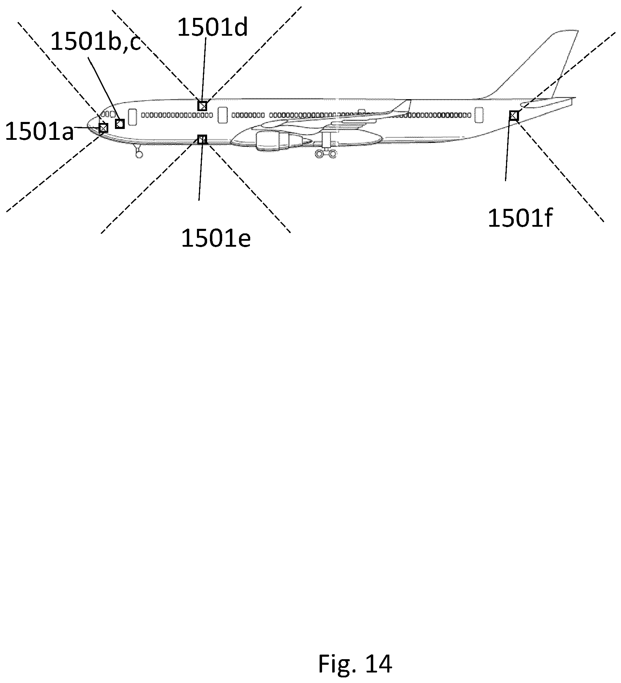

Figure 14 illustrates an example vehicle, in this case an aircraft, with which the example FSO communications nodes described herein may be used. In this example, the aircraft is equipped with six such nodes 1501a-f, located below the cockpit and facing in a forwards direction (1501a), below the cockpit and facing flank left and right of the aircraft (1501b,c, fields-of-regard not shown), above and below the centre fuselage (1501d, 1501e) facing upwards and downwards respectively, and on the rear fuselage facing in a rearwards direction (1501f), to afford the aircraft an overall FoR in all directions. Providing a vehicle/aircraft/spacecraft with the FSO communications node 121 may allow the vehicle/aircraft/spacecraft to communicate with other vehicles/aircraft/spacecraft and/or ground-based units via optical communications. For example, a network of aircraft/spacecraft may be deployed to provide FSO communications over a wide area. In another example, a ground vehicle equipped with the FSO communication node 121 could communicate with an airborne drone equipped with the FSO communication node 121. The FSO communication node 121 could be attached to a structure such as a building in order to communicate with a vehicle equipped with a node 121.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A pointing unit (100) for a free space optical communications terminal (105, 600), the pointing unit being for steering an incident electromagnetic beam (107), the pointing unit comprising, along a principal axis thereof:
a first pair of steering elements (101) and a second pair of steering elements (102),
arranged along the principal axis such that a beam transmitted by the free space optical communications terminal is received by the first pair of steering elements and then by the second pair of steering elements,
each pair comprising a first steering element (101a, 102a) and a second steering element (101b, 102b),
each steering element of the first pair configured to steer a beam by a first steering angle and each steering element of the second pair configured to steer a beam by a second steering angle,
each steering element of the first and second pairs having a substantially circular cross-section with a corresponding diameter in a plane perpendicular to the principal axis and being rotatable about the principal axis;
and the pointing unit further comprising a controller (103) configured to rotate the steering elements of the first and second pair in order to steer the incident beam towards a target according to a control scheme, wherein the control scheme comprises, for each pair of steering elements:
rotation of the first steering element of the pair between respective first rotational positions and rotation of the second steering element of the pair between corresponding respective second rotational positions, each first rotational position and corresponding second rotational position being equal and opposite angular displacements from a reference rotational position of the pair,
wherein the reference rotational position of the first pair is different from the reference rotational position of the second pair such that rotation of the steering elements of the first pair according to the control scheme changes a first overall steering of the incident beam in a first plane and rotation of the steering elements of the second pair according to the control scheme changes a second overall steering of the incident beam in a second plane different to the first plane;
the pointing unit **characterised in that**
each steering element of the first steering pair has a first diameter and each steering element of the second steering pair has a second diameter, the second diameter being larger than the first diameter.

2. The pointing unit according to claim 1, wherein the rotational reference position of the first pair is at 90 degrees from the rotational reference position of the second pair, and the second plane is perpendicular to the first plane.

3. The pointing unit according to any one of the previous claims, wherein the rotation of the steering elements comprises, for at least one of the pairs, rotation of the steering elements of the pair in opposite directions and at the same speed.

4. The pointing unit according to any one of the previous claims, wherein (i) for at least one of the pairs, the steering elements of the pair have the same shape and mass and/or (ii) the first steering angle has the same magnitude as the second steering angle.

5. The pointing unit according to any one of the previous claims, wherein the maximum magnitude of overall steering angle of each respective pair is at least 45 degrees.

6. The pointing unit according to any one of the previous claims, wherein the steering elements comprise metamaterial elements, optionally wherein the metamaterial elements are silicon metaprisms.

7. The pointing unit according to any one of the previous claims, wherein the first pair of steering elements and the second pair of steering elements are separated by no more than 10mm.

8. The pointing unit according to any one of the previous claims, wherein at least one steering element is housed in a supporting element (305), wherein rotation of the at least one steering element is by rotation of the supporting element, optionally wherein at least one supporting element comprises integrated teeth (310) such that the supporting element is operable as a gear.

9. The pointing unit according to claim 8, wherein
at least one supporting element comprises a magnet (320);
the pointing unit comprises a Hall sensor (190) configured to detect the magnet; and
the controller is configured to determine the rotational position of the supporting element comprising a magnet by using the Hall sensor.

10. The pointing unit according to any one of the previous claims, wherein the steering elements are rotated by one or more motors, optionally wherein the motors are stepper motors, and the controller counts the number of steps taken by the stepper motors to keep track of the respective rotational positions of the steering elements.

11. A free-space optical communications node (121) comprising the pointing unit of any one of the previous claims; and a terminal (105) comprising an optical source configured to provide the electromagnetic beam to the pointing unit.

12. A vehicle comprising the pointing unit according to any one of claim 1 to 10 or the free-space optical communications node of claim 11, optionally wherein the vehicle is an aircraft and/or spacecraft.

13. A method of operating a pointing unit (100) for a free space optical communications terminal (105, 600), the pointing unit being for steering an incident electromagnetic beam towards a target, the pointing unit comprising, along a principal axis thereof:
a first pair of steering elements (101) and a second pair of steering elements (102),
each pair comprising a first steering element (101a, 102a) and a second steering element (101b, 102b),
each steering element of the first pair configured to steer a beam by a first steering angle and each steering element of the second pair configured to steer a beam by a second steering angle,
each steering element of the first and second pairs having a substantially circular cross-section with a corresponding diameter in a plane perpendicular to the principal axis and being rotatable about the principal axis, and each steering element of the first steering pair having a first diameter and each steering element of the second steering pair having a second diameter, the second diameter being greater than the first diameter, and arranged along the principal axis such that a beam transmitted from the free space optical communications terminal is received by the first pair of steering elements and then by the second pair of steering elements;
the method comprising, for each pair of steering elements:
rotating the first steering element of the pair between respective first rotational positions and rotating the second steering element of the pair between corresponding respective second rotational positions, each first rotational position and corresponding second rotational position being equal and opposite angular displacements from a respective reference rotational position of the respective pair,
wherein the reference rotational position of the first pair is different from the reference rotational position of the second pair such that the rotation of the steering elements of the first pair changes a first overall steering of the incident beam in a first plane and the rotation of the steering elements of the second pair changes a second overall steering of the incident beam in a second plane different to the first plane.

## Patentansprüche

1. Richteinheit (100) für ein Endgerät für eine optische Kommunikation im freien Raum (105, 600), wobei die Richteinheit zum Lenken eines einfallenden elektromagnetischen Strahls (107) dient, wobei die Richteinheit entlang einer Hauptachse von ihr Folgendes umfasst:
ein erstes Paar Lenkelemente (101) und ein zweites Paar Lenkelemente (102), die entlang der Hauptachse derart angeordnet sind, dass ein Strahl, der durch das Endgerät für eine optische Kommunikation im freien Raum gesendet wird, durch das erste Paar Lenkelemente und dann durch das zweite Paar Lenkelemente empfangen wird,
wobei jedes Paar ein erstes Lenkelement (101a, 102a) und ein zweites Lenkelement (101b, 102b) umfasst,
jedes Lenkelement des ersten Paars konfiguriert ist, einen Strahl um einen ersten Lenkwinkel zu lenken, und jedes Lenkelement des zweiten Paars konfiguriert ist, einen Strahl um einen zweiten Lenkwinkel zu lenken,
jedes Lenkelement des ersten und des zweiten Paars einen im Wesentlichen kreisförmigen Querschnitt mit einem entsprechenden Durchmesser in einer Ebene senkrecht zu der Hauptachse besitzt und um die Hauptachse drehbar ist;
und die Richteinheit ferner eine Steuereinheit (103) umfasst, die konfiguriert ist, die Lenkelemente des ersten und des zweiten Paars zu drehen, um den einfallenden Strahl gemäß einem Steuerschema in Richtung eines Ziels zu lenken, wobei das Steuerschema für jedes Paar Lenkelemente Folgendes umfasst:
Drehen des ersten Lenkelements des Paars zwischen jeweiligen ersten Drehpositionen und Drehen des zweiten Lenkelements des Paars zwischen entsprechenden jeweiligen zweiten Drehpositionen, wobei jede erste Drehposition und entsprechende zweite Drehposition gleich und entgegengesetzte Winkelverschiebungen von einer Referenzdrehposition des Paars sind,
wobei die Referenzdrehposition des ersten Paars von der Referenzdrehposition des zweiten Paars verschieden ist, so dass eine Drehung der Lenkelemente des ersten Paars gemäß dem Steuerschema ein erstes gesamtes Lenken des einfallenden Strahls in einer ersten Ebene ändert und eine Drehung der Lenkelemente des zweiten Paars gemäß dem Steuerschema ein zweites gesamtes Lenken des einfallenden Strahls in einer zweiten Ebene, die von der ersten Ebene verschieden ist, ändert;
wobei die Richteinheit **dadurch gekennzeichnet ist, dass** jedes Lenkelement des ersten Lenkpaars einen ersten Durchmesser besitzt und jedes Lenkelement des zweiten Lenkpaars einen zweiten Durchmesser besitzt, wobei der zweite Durchmesser größer als der erste Durchmesser ist.

2. Richteinheit nach Anspruch 1, wobei die Drehreferenzposition des ersten Paars bei 90 Grad von der Drehreferenzposition des zweiten Paars ist und die zweite Ebene senkrecht zu der ersten Ebene ist.

3. Richteinheit nach einem der vorhergehenden Ansprüche, wobei die Drehung der Lenkelemente für mindestens eines der Paare eine Drehung der Lenkelemente des Paars in entgegengesetzten Richtungen und mit derselben Geschwindigkeit umfasst.

4. Richteinheit nach einem der vorhergehenden Ansprüche, wobei (i) für mindestens eines der Paare die Lenkelemente des Paars dieselbe Form und Masse aufweisen und/oder (ii) der erste Lenkwinkel dieselbe Größe wie der zweite Lenkwinkel aufweist.

5. Richteinheit nach einem der vorhergehenden Ansprüche, wobei die maximale Größe des gesamten Lenkwinkels jedes jeweiligen Paars mindestens 45 Grad beträgt.

6. Richteinheit nach einem der vorhergehenden Ansprüche, wobei die Lenkelemente Metamaterialelemente umfassen, wobei die Metamaterialelemente wahlweise Siliziummetaprismen sind.

7. Richteinheit nach einem der vorhergehenden Ansprüche, wobei das erste Paar Lenkelemente und das zweite Paar Lenkelemente um nicht mehr als 10 mm getrennt sind.

8. Richteinheit nach einem der vorhergehenden Ansprüche, wobei mindestens ein Lenkelement in einem Tragelement (305) untergebracht ist, wobei eine Drehung des mindestens einen Lenkelements durch eine Drehung des Tragelements erfolgt wobei mindestens ein Tragelement wahlweise eingebaute Zähne (310) umfasst, so dass das Tragelement als ein Zahnrad betrieben werden kann.

9. Richteinheit nach Anspruch 8, wobei
mindestens ein Tragelement einen Magneten (320) umfasst; die Richteinheit einen Hall-Sensor (190) umfasst, der konfiguriert ist, den Magneten zu detektieren; und
die Steuereinheit konfiguriert ist, die Drehposition des Tragelements, das einen Magneten umfasst, durch Verwenden des Hall-Sensors zu bestimmen.

10. Richteinheit nach einem der vorhergehenden Ansprüche, wobei die Lenkelemente durch einen oder mehrere Motoren gedreht werden, wobei die Motoren wahlweise Schrittmotoren sind und die Steuereinheit die Anzahl der Schritte, die durch die Schrittmotoren unternommen werden, zählt, um die jeweiligen Drehpositionen der Lenkelemente zu beobachten.

11. Knoten für eine optische Kommunikation im freien Raum (121), der die Richteinheit nach einem der vorhergehenden Ansprüche und ein Endgerät für eine optische Kommunikation im freien Raum (105), das eine optische Quelle umfasst, die konfiguriert ist, den elektromagnetischen Strahl an die Richteinheit zu liefern, umfasst.

12. Fahrzeug, das die Richteinheit nach einem der Ansprüche 1 bis 10 oder den Knoten für eine optische Kommunikation im freien Raum nach Anspruch 11 umfasst, wobei das Fahrzeug wahlweise ein Flugzeug und/oder ein Raumschiff ist.

13. Verfahren zum Betreiben einer Richteinheit (100) für ein Endgerät für eine optische Kommunikation im freien Raum (105, 600), wobei die Richteinheit zum Lenken eines einfallenden elektromagnetischen Strahls in Richtung eines Ziels dient, wobei die Richteinheit entlang einer Hauptachse von ihr Folgendes umfasst:
ein erstes Paar Lenkelemente (101) und ein zweites Paar Lenkelemente (102),
wobei jedes Paar ein erstes Lenkelement (101a, 102a) und ein zweites Lenkelement (101b, 102b) umfasst,
jedes Lenkelement des ersten Paars konfiguriert ist, einen Strahl um einen ersten Lenkwinkel zu lenken, und jedes Lenkelement des zweiten Paars konfiguriert ist, einen Strahl um einen zweiten Lenkwinkel zu lenken,
jedes Lenkelement des ersten und des zweiten Paars einen im Wesentlichen kreisförmigen Querschnitt mit einem entsprechenden Durchmesser in einer Ebene senkrecht zu der Hauptachse besitzt und um die Hauptachse drehbar ist, und jedes Lenkelement des ersten Lenkpaars einen ersten Durchmesser besitzt und jedes Lenkelement des zweiten Lenkpaars einen zweiten Durchmesser besitzt, wobei der zweite Durchmesser größer als der erste Durchmesser ist, und entlang der Hauptachse derart angeordnet sind, dass ein Strahl, der von dem Endgerät für eine optische Kommunikation im freien Raum übertragen wird, durch das erste Paar Lenkelemente und dann durch das zweite Paar Lenkelemente empfangen wird;
wobei das Verfahren für jedes Paar Lenkelemente Folgendes umfasst:
Drehen des ersten Lenkelements des Paars zwischen jeweiligen ersten Drehpositionen und Drehen des zweiten Lenkelements des Paars zwischen entsprechenden jeweiligen zweiten Drehpositionen, wobei jede erste Drehposition und entsprechende zweite Drehposition gleich und entgegengesetzte Winkelverschiebungen von einer jeweiligen Referenzdrehposition des jeweiligen Paars sind,
wobei die Referenzdrehposition des ersten Paars von der Referenzdrehposition des zweiten Paars verschieden ist, so dass eine Drehung der Lenkelemente des ersten Paars ein erstes gesamtes Lenken des einfallenden Strahls in einer ersten Ebene ändert und eine Drehung der Lenkelemente des zweiten Paars ein zweites gesamtes Lenken des einfallenden Strahls in einer zweiten Ebene, die von der ersten Ebene verschieden ist, ändert.

## Revendications

1. Unité (100) de pointage pour un terminal (105, 600) de communications optiques en espace libre, l'unité de pointage étant destinée à orienter un faisceau électromagnétique incident (107), l'unité de pointage comprenant, suivant un axe principal de celle-ci :
une première paire d'éléments (101) d'orientation et une seconde paire d'éléments (102) d'orientation, disposées le long de l'axe principal de telle sorte qu'un faisceau émis par le terminal de communications optiques en espace libre soit reçu par la première paire d'éléments d'orientation, puis par la seconde paire d'éléments d'orientation,
chaque paire comprenant un premier élément (101a, 102a) d'orientation et un second élément (101b, 102b) d'orientation,
chaque élément d'orientation de la première paire étant configuré pour orienter un faisceau selon un premier angle d'orientation et chaque élément d'orientation de la seconde paire étant configuré pour orienter un faisceau selon un second angle d'orientation,
chaque élément d'orientation des première et seconde paires présentant une section transversale sensiblement circulaire avec un diamètre correspondant dans un plan perpendiculaire à l'axe principal et pouvant tourner autour de l'axe principal ;
et l'unité de pointage comprenant en outre un moyen (103) de commande configuré pour faire tourner les éléments d'orientation de la première et seconde paire afin d'orienter le faisceau incident vers une cible selon un schéma de commande, le schéma de commande comprenant, pour chaque paire d'éléments d'orientation :
une rotation du premier élément d'orientation de la paire entre des premières positions angulaires respectives et une rotation du second élément d'orientation de la paire entre des secondes positions angulaires respectives correspondantes, chaque première position angulaire et seconde position angulaire correspondante étant égales et opposées à des décalages angulaires par rapport à une position angulaire de référence de la paire,
la position angulaire de référence de la première paire étant différente de la position angulaire de référence de la seconde paire de sorte que la rotation des éléments d'orientation de la première paire selon le schéma de commande modifie une première orientation globale du faisceau incident dans un premier plan et que la rotation des éléments d'orientation de la seconde paire selon le schéma de commande modifie une seconde orientation globale du faisceau incident dans un second plan différent du premier plan ;
l'unité de pointage étant **caractérisée en ce que**
chaque élément d'orientation de la première paire d'orientation présente un premier diamètre et chaque élément d'orientation de la seconde paire d'orientation présente un second diamètre, le second diamètre étant supérieur au premier diamètre.

2. Unité de pointage selon la revendication 1, la position angulaire de référence de la première paire se trouvant à 90 degrés de la position angulaire de référence de la seconde paire, et le second plan étant perpendiculaire au premier plan.

3. Unité de pointage selon l'une quelconque des revendications précédentes, la rotation des éléments d'orientation comprenant, pour au moins une des paires, une rotation des éléments d'orientation de la paire dans des sens opposés et à la même vitesse.

4. Unité de pointage selon l'une quelconque des revendications précédentes, dans laquelle (i) pour au moins une des paires, les éléments d'orientation de la paire ont la même forme et la même masse et/ou (ii) le premier angle d'orientation a la même mesure que le second angle d'orientation.

5. Unité de pointage selon l'une quelconque des revendications précédentes, la mesure maximale de l'angle d'orientation global de chaque paire respective étant d'au moins 45 degrés.

6. Unité de pointage selon l'une quelconque des revendications précédentes, les éléments d'orientation comprenant des éléments de métamatériau, les éléments de métamatériau étant éventuellement des méta-prismes de silicium.

7. Unité de pointage selon l'une quelconque des revendications précédentes, la première paire d'éléments d'orientation et la seconde paire d'éléments d'orientation n'étant pas écartées de plus de 10 mm.

8. Unité de pointage selon l'une quelconque des revendications précédentes, au moins un élément d'orientation étant logé dans un élément (305) de soutien, la rotation de l'élément ou des éléments d'orientation se faisant par rotation de l'élément de soutien, au moins un élément de soutien comprenant éventuellement des dents intégrées (310) de sorte que l'élément de soutien peut fonctionner comme un engrenage.

9. Unité de pointage selon la revendication 8,
au moins un élément de soutien comprenant un aimant (320) ;
l'unité de pointage comprenant un capteur (190) à effet Hall configuré pour détecter l'aimant ; et
le moyen de commande étant configuré pour déterminer la position angulaire de l'élément de soutien comprenant un aimant au moyen du capteur à effet Hall.

10. Unité de pointage selon l'une quelconque des revendications précédentes, les éléments d'orientation étant mis en rotation par un ou plusieurs moteurs, les moteurs étant éventuellement des moteurs pas à pas, et le moyen de commande comptant le nombre de pas effectués par les moteurs pas à pas pour garder une trace des positions angulaires respectives des éléments d'orientation.

11. Nœud (121) de communications optiques en espace libre comprenant l'unité de pointage selon l'une quelconque des revendications précédentes ; et un terminal (105) comprenant une source optique configurée pour fournir le faisceau électromagnétique à l'unité de pointage.

12. Véhicule comprenant l'unité de pointage selon l'une quelconque des revendications 1 à 10 ou le nœud de communications optiques en espace libre selon la revendication 11, le véhicule étant éventuellement un aéronef et/ou un engin spatial.

13. Procédé d'exploitation d'une unité (100) de pointage pour un terminal (105, 600) de communications optiques en espace libre, l'unité de pointage étant destinée à orienter un faisceau électromagnétique incident vers une cible, l'unité de pointage comprenant, suivant un axe principal de celle-ci :
une première paire d'éléments (101) d'orientation et une seconde paire d'éléments (102) d'orientation,
chaque paire comprenant un premier élément (101a, 102a) d'orientation et un second élément (101b, 102b) d'orientation,
chaque élément d'orientation de la première paire étant configuré pour orienter un faisceau selon un premier angle d'orientation et chaque élément d'orientation de la seconde paire étant configuré pour orienter un faisceau selon un second angle d'orientation,
chaque élément d'orientation des première et seconde paires présentant une section transversale sensiblement circulaire de diamètre correspondant dans un plan perpendiculaire à l'axe principal et pouvant tourner autour de l'axe principal, et chaque élément d'orientation de la première paire d'orientation présentant un premier diamètre et chaque élément d'orientation de la seconde paire d'orientation présentant un second diamètre, le second diamètre étant supérieur au premier diamètre, et disposés suivant l'axe principal de telle sorte qu'un faisceau émis depuis le terminal de communications optiques en espace libre soit reçu par la première paire d'éléments d'orientation puis par la seconde paire d'éléments d'orientation ;
le procédé comprenant, pour chaque paire d'éléments d'orientation :
une rotation du premier élément d'orientation de la paire entre des premières positions angulaires respectives et une rotation du second élément d'orientation de la paire entre des secondes positions angulaires respectives correspondantes, chaque première position angulaire et seconde position angulaire correspondante étant égales et opposées à des décalages angulaires par rapport à une position angulaire de référence respective de la paire respective,
la position angulaire de référence de la première paire étant différente de la position angulaire de référence de la seconde paire de sorte que la rotation des éléments d'orientation de la première paire modifie une première orientation globale du faisceau incident dans un premier plan et que la rotation des éléments d'orientation de la seconde paire modifie une seconde orientation globale du faisceau incident dans un second plan différent du premier plan.
